# EUROPÄISCHE PATENTANMELDUNG

(11) **EP 2 413 481 A2**
(43) Veröffentlichungstag der Anmeldung: **01.02.2012**
(21) Anmeldenummer: 11169747.0
(22) Anmeldetag: 14.06.2011
(51) Int. Cl.: H02K 5/22, H02K 15/00

(54) **Elektrische Maschine mit Stator-Direktkontaktierung**

(30) Priorität: 29.07.2010 DE 102010038666
(71) Anmelder: Robert Bosch GmbH, 70442 Stuttgart (DE)
(72) Erfinder: Bahr, Markus, 71332 Waiblingen (DE); Kern, Denis, 70190 Stuttgart-Ost (DE)

(57) **Zusammenfassung**

Es ist eine elektrische Maschine angegeben, die einen Gehäusekörper und ein Gehäuseelement zum Aufsetzen auf den Gehäusekörper aufweist. Weiterhin ist ein Stecker mit einem Kontaktsystem vorgesehen, der in das Gehäuseelement integriert ist. Ein Kontaktstück, in dem Einzeladern eines Stators der elektrischen Maschine zusammengeführt sind, wird beim Zusammenfügen von Gehäusekörper und Gehäuseelement in das Kontaktsystem des Steckers eingeschoben.

## Beschreibung

### Stand der Technik

Derzeit werden die Hochspannungsphasen (HV-Phasen) des Stators der elektrischen Maschine eines Hybridmoduls oder eines Elektrofahrzeugs durch eine Öffnung im Lagerschild des Loslagers gefädelt. Anschließend werden die Phasen mit dem jeweiligen HV-Stecker mittels Schrauben verbunden.

Aufgrund dieser konstruktiven Lösung ergeben sich oft aufwändige Prozesse bei der Montage des Lagerschildes hinsichtlich der genauen Positionierung des Stators zur Öffnung des Lagerschildes. Zudem mag es erforderlich sein, dass die Phasen bei nicht einhaltbarem Isolationsabstand, beispielsweise aufgrund des begrenzten verfügbaren Bauraumes, voneinander isoliert werden. Ein weiterer Effekt, der sich aus dieser Anordnung ergibt, besteht darin, dass die möglichen Abgangsrichtungen für den HV-Anschluss der elektrischen Maschine aus Montagesicht stark eingeschränkt sind.

### Offenbarung der Erfindung

Es ist eine Aufgabe der Erfindung, die Endmontage einer elektrischen Maschine für ein Hybridmodul oder ein Elektrofahrzeug zu vereinfachen.

Es sind eine elektrische Maschine, ein Fahrzeug mit einer elektrischen Maschine und ein Verfahren zum Herstellen einer elektrischen Maschine gemäß den Merkmalen der unabhängigen Patentansprüche angegeben. Weiterbildungen der Erfindung ergeben sich aus den Unteransprüchen.

Gemäß einem ersten Aspekt der Erfindung ist eine elektrische Maschine, beispielsweise für ein Hybridmodul oder für ein Elektrofahrzeug, angegeben, welche einen Gehäusekörper und ein Gehäuseelement aufweist. Das Gehäuseelement ist zum Aufsetzen auf den Gehäusekörper während der Endmontage der elektrischen Maschine ausgeführt. Weiterhin ist ein Stecker vorgesehen, der in das Gehäuseelement integriert ist. Zusätzlich weist die elektrische Maschine ein Kontaktstück auf, das beispielsweise an dem Gehäusekörper befestigt ist, und in dem einzelne Adern eines Stators der elektrischen Maschine zusammengeführt sind. Während der Endmontage wird das Kontaktstück in ein entsprechendes Kontaktsystem des Steckers eingeschoben. Der Stecker dient zum elektrischen Anschluss der Einzeladern des Stators der elektrischen Maschine an eine externe Energieversorgung.

Hierdurch kann der Montageprozess der Kontaktierung des Stators vereinfacht werden, da das schwer zu handhabende Durchführen der Statorphasen durch die schmale Öffnung im Lagerschild entfällt.

Zudem wird erreicht, dass der bisher erforderliche Schraubprozess für die Kontaktierung der Statorphasen mit dem jeweiligen HV-Steckkontakt entfällt. Dadurch wird erreicht, dass eine mögliche Fehlerquelle im Prozess (z.B. beim Fügen der Schrauben) vermieden und die Anzahl der erforderlichen Bauteile und somit die Beschaffungs-, Montage-, Prozess- und Logistikkosten reduziert werden.

Somit kann ein weiteres Bauteil bzw. dessen Fügeprozess eingespart werden. Durch die Direktkontaktierung und in einem Fall der Verschraubung der Phasen mit dem HV-Steckkontakt kann der Verschlussdeckel eingespart werden. Durch die Einsparung dieses Deckels ergibt sich zudem die Vermeidung einer potenziell möglichen Fehlerquelle, da keine Dichtung mehr erforderlich ist und somit der Schutz der elektrischen Ausrüstung gegen Medien von außen sichergestellt werden kann.

Zudem kann eine kompaktere Bauweise erreicht werden, da die Einhaltung von Isolationsabständen entfällt bzw. eine Isolierung der Statorphasen nicht mehr erforderlich ist.

Gemäß einem weiteren Aspekt der Erfindung ist ein Fahrzeug mit einer oben und im Folgenden beschriebenen elektrischen Maschine angegeben.

Bei dem Fahrzeug handelt es sich beispielsweise um ein Hybridfahrzeug oder ein Elektrofahrzeug. In anderen Worten handelt es sich bei der elektrischen Maschine um einen Elektroantrieb des Fahrzeugs oder um einen Teil eines Hybridantriebs des Fahrzeugs.

Gemäß einem weiteren Aspekt der Erfindung ist ein Verfahren zum Herstellen einer oben und im Folgenden beschriebenen elektrischen Maschine angegeben. Bei dem Verfahren erfolgt ein Zusammenführen von Einzeladern eines Stators der elektrischen Maschine in einem Kontaktstück eines Gehäusekörpers der elektrischen Maschine. Bei der Endmontage wird das Kontaktstück in ein entsprechendes Kontaktsystem des Steckers, welches in dem Gehäuseelement der elektrischen Maschine integriert ist, eingeschoben. Dieses Einschieben erfolgt also während dem Zusammenfügen des Gehäusekörpers und des Gehäuseelements. Der Stecker dient dem elektrischen Anschluss der Einzeladern des Stators der elektrischen Maschine an einer externen Energieversorgung.

Dieses Verfahren erleichtert insbesondere den Anschluss des Stators an eine Energieversorgungsschnittstelle der Maschine.

Gemäß einem Ausführungsbeispiel der Erfindung weist das Kontaktsystem des Steckers ein Leitstück auf, welches leitend mit dem Kontaktstück verbunden ist, wenn der Gehäusekörper und das Gehäuseelement zusammengefügt sind, und welches in das Gehäuseelement integriert ist.

### Hierdurch kann die mechanische Stabilität der Kontaktierung erhöht werden.

Gemäß einem weiteren Ausführungsbeispiel der Erfindung weist das Kontaktstück einen sogenannten Phasencrimp auf, der die Einzeladern des Stators zusammenführt, so dass eine ausreichende elektrische Kontaktierung der Einzeladern und eine mechanische Belastbarkeit gewährleistet ist. Auch kann eine Löthülse oder dergleichen vorgesehen sein.

Ein solcher Phasencrimp bzw. die Verwendung einer Löthülse kann den Herstellungsprozess der Maschine vereinfachen.

Gemäß einem weiteren Ausführungsbeispiel der Erfindung handelt es sich bei dem Leitstück um ein Einlegteil, welches in das Gehäuseelement eingelegt und umspritzt ist.

Auch dies kann den Herstellungsprozess vereinfachen und darüber hinaus die Stabilität der Kontaktierung der Statorphasen erhöhen.

Weiterhin ist es möglich, dass die Längsachse des Steckers und die Längsachse des Kontaktstücks zwar parallel zueinander liegen, aber nicht zusammen fallen. Hierdurch kann die Stabilität der Anordnung erhöht werden, da sich die auf den Stecker ausgeübten mechanischen Kräfte nicht direkt auf das Kontaktstück übertragen.

Alternativ oder zusätzlich hierzu kann auch ein Sicherungselement vorgesehen sein, welches eine mechanische Entlastung des Kontaktstücks mit sich bringt, da es die mechanischen Kräfte, die auf den Stecker ausgeübt werden, aufnehmen kann. Es kann auch eine direkte Durchführung durch das Gehäuseelement erfolgen, wodurch der "Phasencrimp" oder dergleichen zum direkten späteren Steckkontakt zur äußeren Energieversorgung wird. Durch diese Art der Direktkontaktierung werden die entstehenden Übergangswiderstände im elektrischen Kreislauf auf ein Minimum reduziert.

Im Folgenden werden mit Verweis auf die Figuren Ausführungsbeispiele der Erfindung beschrieben.

Kurze Beschreibung der Zeichnungen
Fig. 1 zeigt ein Kontaktsystem einer elektrischen Maschine gemäß einem Ausführungsbeispiel der Erfindung.
Fig. 2 zeigt ein Kontaktsystem einer elektrischen Maschine gemäß einem weiteren Ausführungsbeispiel der Erfindung.
Fig. 3 zeigt ein Kontaktsystem einer elektrischen Maschine gemäß einem weiteren Ausführungsbeispiel der Erfindung.
Fig. 4 zeigt ein Kontaktsystem einer elektrischen Maschine gemäß einem weiteren Ausführungsbeispiel der Erfindung.
Fig. 5 zeigt ein Kontaktsystem einer elektrischen Maschine gemäß einem weiteren Ausführungsbeispiel der Erfindung.
Fig. 6 zeigt eine Demontagehilfe eines Kontaktsystems gemäß einem Ausführungsbeispiel der Erfindung.
Fig. 7 zeigt ein Fahrzeug mit einer elektrischen Maschine gemäß einem Ausführungsbeispiel der Erfindung.
Fig. 8 zeigt ein Flussdiagramm eines Verfahrens gemäß einem Ausführungsbeispiel der Erfindung.

### Ausführungsformen der Erfindung

Die Darstellungen in den Figuren sind schematisch und nicht maßstäblich. In der folgenden Figurenbeschreibung werden für die gleichen oder ähnlichen Elemente die gleichen Bezugsziffern verwendet.

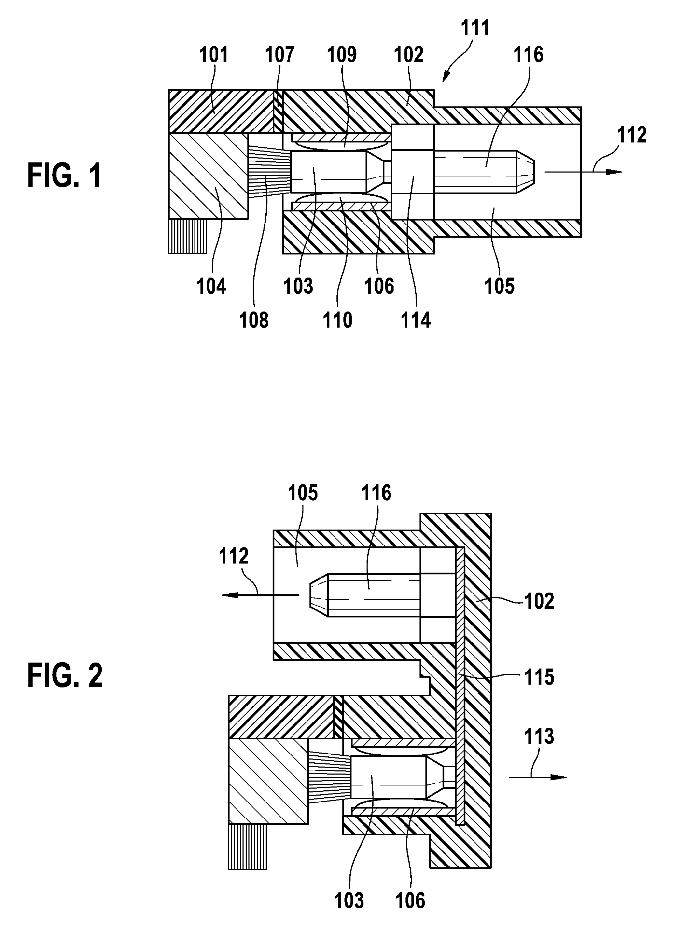

Fig. 1 zeigt ein Kontaktsystem einer elektrischen Maschine gemäß einem Ausführungsbeispiel der Erfindung. Die elektrische Maschine weist ein Gehäuse 101 und ein Gehäuseelement, das beispielsweise aus einem nicht leitenden Material besteht oder mit einer nicht leitenden Beschichtung versehen ist, auf. Bei der Endmontage werden das Gehäuse 101 und das Gehäuseelement 102 zusammengeführt. Zwischen dem Gehäuse 101 und dem Gehäuseelement 102 ist eine Dichtung 107 vorgesehen. Die Dichtung 107 kann auch ein direkt auf das Gehäuseelement aufgebrachtes Dichtelement sein, so dass dieser Montageschritt entfallen kann. Ein mögliches Herstellungsverfahren bei Kunststoffen ist der 2-Komponenten-Spritzguss oder das CIPG-Verfahren, wobei letzteres auch bei einem metallischen Grundwerkstoff eingesetzt werden kann.

Im Inneren des Gehäuses 101 befinden sich ein oder mehrere Statoren 104, von denen jeweils Einzeladern 108 abgehen, die jeweils in einem Kontaktstück 103 (beispielsweise einem Phasencrimp) zusammengeführt sind. Dieses Kontaktstück 103 wird bei der Endmontage, also dem Zusammenführen von Gehäuse 101 und Gehäuseelement 102, zwischen zwei oder mehrere flexible Backen 109, 110 (hier: blattfederförmige Backen) des Leitstücks 106 des HV-Steckers 105 eingeschoben. Gleichzeitig wird das Kontaktstück in ein entsprechendes Kontaktsystem 111 des Leitstücks 106 eingeschoben.

Im Ausführungsbeispiel der Fig. 1 sind die Längsachsen (siehe Pfeil 112) des Kontaktstücks 103 und des Leitstücks bzw. des Steckers, der die Elemente 105, 106, 116 aufweist, parallel zueinander ausgerichtet und fallen zusammen (liegen übereinander).

Die Einzeladern des Stators werden also in dem Kontaktstück 103 zusammengeführt, welches anschließend vercrimpt wird, so dass eine ausreichende elektrische Kontaktierung der Einzeladern und eine mechanische Belastbarkeit gewährleistet sind. Kabelschuhe sind nicht erforderlich. Bei Verwendung von Löthülsen, wird die Verbindung der Einzeladern mittels Lot untereinander und zur ummantelnden äußeren Hülse (Kontaktstück 103) hergestellt.

Beim Fügevorgang des Gehäuses 101 und des Gehäuseelements 102 wird das Kontaktstück (also zum Beispiels der Phasencrimp) 103 in das Kontaktsystem des Leitstücks eingeschoben, welches wiederum direkten elektrischen Kontakt mit dem HV-Stecker 105, 106, 116 hat. Das Leitstück ist hierbei in das Gehäuseelement als Gegenstück eingepresst oder direkt mit eingespritzt (siehe hierzu auch die Figs. 2 bis 4). Es erweist sich als zweckmäßig, dass das Leitstück beinhaltende Gehäuseelement aus einem elektrisch nicht leitenden Werkstoff besteht. Sofern dies aus Gründen der Festigkeit nicht möglich sein sollte, kann das Leitstück auch als Einpressteil mit nicht leitender Ummantelung ausgeführt sein. Das Leitstück muss nicht eingepresst werden. Sofern das Gehäuseelement aus einem leitenden Werkstoff besteht kann eine mechanische Verbindung zwischen dem Gehäuseelement und dem Leitstück auch mittels Kleben erfolgen, wobei der verwendete Klebstoff die elektrisch isolierende Funktion übernimmt.

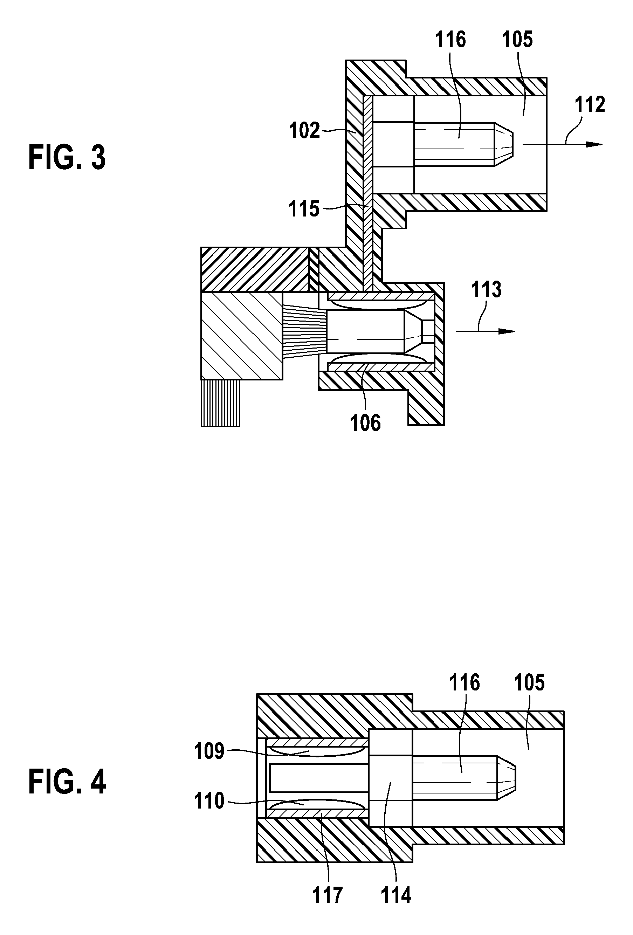

Es bietet sich an, das Leitstück 106 mit einer Verdrehsicherung oder einer sonstigen Geometrie auszustatten, so dass die erforderlichen Steck- und Abziehkräfte des Steckers aufgenommen werden können und sich nicht direkt auf das Kontaktstück 103 übertragen. Beispielsweise kann ein mechanisches Sicherungselement 114 in Form eines Schraubensechskant vorgesehen sein, wie dies in Fig. 4 dargestellt ist. Die genaue Geometrie ist von den geforderten Beanspruchungen abhängig und wird entsprechend den Belastungsrichtungen ausgeführt.

Sofern die Direktkontaktierung in die gleiche Richtung wie die HV-Steckerabgangsrichtung 112 zeigt (siehe Fig. 1), kann anstelle eines umspritzten Einlegeteils ein Einpressteil verwendet werden. Die Direktkontaktierung bietet den Vorteil, sofern es sich bei dem Leitstück 103 um ein umspritztes Einlegeteil handelt, dass die Abgangsrichtung 112 frei variiert werden kann (siehe hierzu auch Figs. 2 und 3). In Fig. 2 ist die Abgangsrichtung 112 des Steckers 105, 106, 116 antiparallel (also entgegengesetzt) zu der Zugangsrichtung 113 des Kontaktstücks 103. Weiterhin fallen die beiden Achsen 112, 113 nicht zusammen.

Im Ausführungsbeispiel der Fig. 3 fallen die beiden Achsen 112 und 113 ebenfalls nicht zusammen, sind aber parallel und die Zugangsrichtung 113 und die Abgangsrichtung 112 weisen in dieselbe Richtung.

Bei einer anderen Bauart kann das Leitstück auch bei einer Abgangsrichtung, wie in Figs. 2 und 3 dargestellt, als Einpressteil ausgeführt werden, worauf hier jedoch nicht weiter eingegangen werden soll.

Unabhängig davon, ob es sich bei dem Leitstück um ein Einpressteil oder vorzugsweise um ein umspritztes Einlegeteil handelt, erfolgt kein "Durchfädeln" der Statorphasen durch das Gehäuseelement.

Bei den Ausführungsbeispielen der Figs. 2 und 3 weist das Kontaktsystem des Steckers 105, 106, 116 ein Leitstück 106, 115 auf, welches nicht direkt hinter dem Stecker angeordnet ist, sondern über eine leitende Verbindung 115, die in dem Gehäuseelement 102 integriert ist, leitend mit dem Stecker 105, 106, 116 verbunden ist. Es handelt sich zum Beispiel um ein umspritztes Einlegeteil. Diese Ausführungsformen weisen eine erhöhte mechanische Stabilität des elektrischen Anschlusses auf, da die beiden Achsen 112 und 113 nicht zusammen fallen.

An dieser Stelle ist darauf hinzuweisen, dass die beiden Achsen 112 und 113 nicht parallel zueinander angeordnet sein müssen, sondern auch einen anderen Winkel zueinander einschließen können.

Fig. 4 zeigt das Gehäuseelement 102 einer elektrischen Maschine, bevor es mit einem Gehäusekörper 101 zusammengeführt wird. Der Stecker 105, 106, 116, 117 weist einen HV-Kontakt 116 auf, an dem eine externe Energieversorgung angeschlossen werden kann. Auf der Rückseite des HV-Kontakts 116 befindet sich das Kontaktsystem zum Anschluss an das entsprechende Kontaktstück, welches bei der Endmontage in das Kontaktsystem eingeschoben wird. Das Kontaktsystem weist beispielsweise eine axiale Kontaktleiste 117 auf, um welche Federelemente 109, 110 in Umfangsrichtung angeordnet sind.

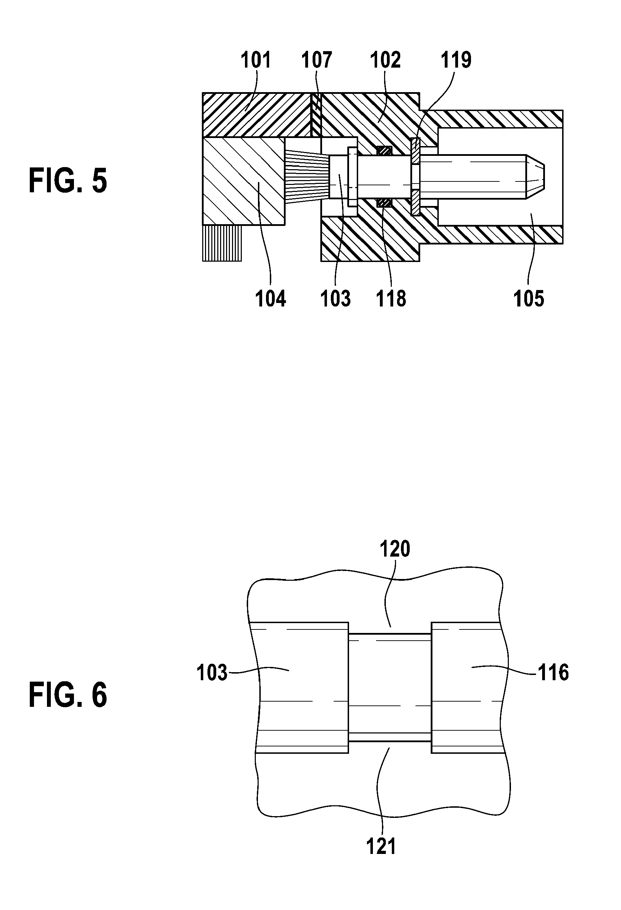

Auch ist eine Direktkontaktierung ohne Leitstück (also ohne einem "Zwischenelement") möglich. Dies ist in Fig. 5 dargestellt. Es ist ein axiales Sicherungselement 119 vorgesehen, beispielsweise in Form eines Sicherungsrings oder einer Rasthakengeometrie. Das Sicherungselement ist im Gehäuseelement 102 integriert und nimmt mechanische Kräfte auf, die z.B. von einer Verwendung des Steckers herrühren. Es können auch mehrere solche Sicherungselemente vorgesehen sein. Weiterhin kann in diesem und in den anderen Ausführungsbeispielen eine innere Dichtung 118 vorgesehen sein, die ebenfalls in dem Gehäuseelement 102 integriert ist und das Kontaktstück 103 gegen das Gehäuseelement 102 abdichtet. Die innere Dichtung ist kein zwangsläufig notwendiges Element, da die Dichtheit durch eine Dichtung im HV-Stecker der von außen aufgesteckt wird erreicht wird. In diesem Zusammenhang ist die Dichtung nur eine Zusatzabsicherung und hat als Nebenfunktion schwingungsdämpfende Eigenschaften.

Das Kontaktstück 103 kann als einseitig gestauchter Phasencrimp ausgeführt sein oder eine andere Form aufweisen. Das oder die axialen Sicherungselemente 119 dienen der Aufnahme der Steckkräfte, die vom HV-Kontakt 116 ausgehen, und sind beispielsweise ringförmig oder stiftförmig ausgeführt und um einen Bereich 120, 121 des Steckers angeordnet, der einen geringeren Durchmesser aufweist, als der vordere Kontaktstift 116 des Steckers. Das Sicherungselement 119 ragt in den Bereich 120, 121 hinein. Der Kontakt kann auch plattenförmig ausgeführt sein, was jedoch eine Kontaktierung der Einzeladern des Stators aufwendig machen kann. Es handelt sich dann um ein Stanzbiegeteil.

Hierbei handelt es sich auch um eine Demontagehilfe, wie sie in Fig. 6 dargestellt ist, und welche im Servicefall die Demontage der elektrischen Maschine erleichtert. Das Kontaktstück 103 kann somit axial herausgezogen werden und die dabei auftretenden Kräfte werden zumindest teilweise von dem Sicherungselement 119 aufgenommen.

FIG.6 zeigt ebenfalls eine Nut, die als axiales Sicherungselement bei einer direkten Kontaktierung wie in Fig. 5 zur Aufnahme der Steckkräfte des Stechers zur Kontaktierung zur externen Energieversorgung dient.

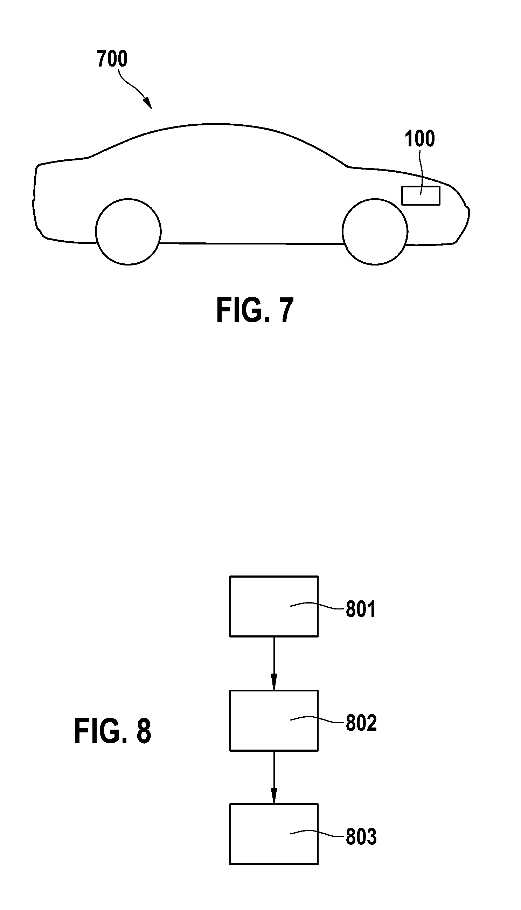

Fig. 7 zeigt ein Fahrzeug 700 mit einer elektrischen Maschine 100. Bei dem Fahrzeug handelt es sich beispielsweise um ein Hybridfahrzeug oder ein Elektrofahrzeug und bei der elektrischen Maschine 100 dementsprechend um einen Elektroantrieb oder Teil eines Hybridantriebs des Fahrzeugs 700.

Fig. 8 zeigt ein Flussdiagramm eines Verfahrens gemäß einem Ausführungsbeispiel der Erfindung. In Schritt 801 werden die Einzeladern eines Stators einer elektrischen Maschine in einem Kontaktstück eines Gehäusekörpers zusammengeführt. In Schritt 802 erfolgt ein Zusammenfügen des Gehäusekörpers und eines Gehäuseelements der elektrischen Maschine. Bei diesem Zusammenfügen wird das Kontaktstück in ein entsprechendes Kontaktsystem eines Steckers, der in dem Gehäuseelement integriert ist, eingeschoben oder aufgeschoben.

In Schritt 803 erfolgt dann derAnschluss des Steckers an eine externe Energieversorgung.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Elektrische Maschine (100), aufweisend:
einen Gehäusekörper (101);
ein Gehäuseelement (102) zum Aufsetzen auf den Gehäusekörper (101);
einen Stecker (105), der in das Gehäuseelement (101) integriert ist;
**dadurch gekennzeichnet, dass**
ein Kontaktstück (103) vorgesehen ist, in dem Einzeladern eines Stators (104) der elektrischen Maschine zusammengeführt sind, und das in ein Kontaktsystem des Steckers eingeschoben ist;
wobei der Stecker (105) zum elektrischen Anschluss der Einzeladern des Stators (104) der elektrischen Maschine an eine externe Energieversorgung ausgeführt ist.

2. Elektrische Maschine nach Anspruch 1, wobei das Kontaktsystem des Steckers aufweist:
ein Leitstück (106), das leitend mit dem Kontaktstück (103) verbunden ist und in das Gehäuseelement (101) integriert ist.

3. Elektrische Maschine nach einem der vorhergehenden Ansprüche,
wobei das Kontaktstück (103) einen Phasencrimp oder eine Löthülse aufweist.

4. Elektrische Maschine nach einem der Ansprüche 1 oder 2,
wobei das Gehäuseelement (102) eine elektrisch isolierende Beschichtung aufweist oder aus einem elektrisch isolierenden Material besteht.

5. Elektrische Maschine nach einem der vorhergehenden Ansprüche,
wobei das Leitstück (106) ein Einlegteil ist, das in des Gehäuseelement (101) eingelegt und umspritzt ist.

6. Elektrische Maschine nach einem der Ansprüche 1 bis 4,
wobei das Leitstück (106) ein Einpressteil ist.

7. Elektrische Maschine nach einem der vorhergehenden Ansprüche,
wobei die Längsachse (112) des Steckers (105) parallel ist zu der Längsachse (113) des Kontaktstücks (103).

8. Elektrische Maschine nach Anspruch 7,
wobei die Längsachse (112) des Steckers (105) nicht mit der Längsachse (113) des Kontaktstücks (103) zusammenfällt.

9. Fahrzeug (700) mit einer elektrischen Maschine (100) nach einem der Ansprüche 1 bis 8.

10. Fahrzeug nach Anspruch 9,
wobei es sich bei dem Fahrzeug (700) um ein Hybridfahrzeug oder ein Elektrofahrzeug handelt.

11. Verfahren zum Herstellen einer elektrischen Maschine nach einem der Ansprüche 1 bis 8, **dadurch gekennzeichnet, dass** das Verfahren die folgenden Schritte aufweist:
Zusammenführen von Einzeladern eines Stators einer elektrischen Maschine (100) in einem Kontaktstück (103) eines Gehäusekörpers (101) der elektrischen Maschine (100);
Einschieben des Kontaktstücks (103) in ein Kontaktsystem eines Steckers,
das in einem Gehäuseelement (101) integriert ist, während einem Zusammenfügen des Gehäusekörpers (101) und des Gehäuseelements (101);
wobei der Stecker (105) zum elektrischen Anschluss der Einzeladern des Stators (104) der elektrischen Maschine an eine externe Energieversorgung ausgeführt ist.
